# EUROPÄISCHE PATENTSCHRIFT

(11) **EP 0 967 430 B1**
(45) Veröffentlichungstag und Bekanntmachung des Hinweises auf die Patenterteilung: **12.03.2003**
(21) Anmeldenummer: 99111871.2
(22) Anmeldetag: 21.06.1999
(51) Int. Cl.: F16L 59/14, F16L 11/12, F16L 9/19, B21C 37/06, F16L 11/127

(54) **Verfahren zur Erzeugung eines Kanals einer wärmegedämmten Rohrleitung**
Method for manufacturing a channel of an insulated pipeline
Procédé pour la fabrication d' un canal pour une canalisation isolée

(30) Priorität: 23.06.1998 DE 19827832
(43) Veröffentlichungstag der Anmeldung: 29.12.1999
(73) Patentinhaber: Thomas, Karl-Wilhelm, D-41540 Dormagen (DE)
(72) Erfinder:
(74) Vertreter: Freischem, Stephan, Dipl.-Ing.

(56) Entgegenhaltungen:
- CH-A- 429 327
- DE-C- 4 039 863
- DE-C- 19 618 370

## Beschreibung

Die Erfindung betrifft ein Verfahren zur Erzeugung eines Kanals einer wärmegedämmten Rohrleitung, bei dem auf einem Innenrohr mindestens ein entlang der Außenfläche des Innenrohrs verlaufender Kanal aus einem vorzugsweise metallischen Materialstreifen ausgebildet wird, welcher mindestens einen mittleren, gewölbten Abschnitt sowie zwei auf der Außenfläche des Innenrohrs aufliegende seitliche Abschnitte aufweist, wobei das Innenrohr mit dem Kanal in ein Mantelrohr eingebracht wird und der Zwischenraum zwischen dem Innenrohr mit dem Kanal und dem Mantelrohr mit einer fließfähigen, aushärtenden Isoliermasse verfüllt wird.

Ein derartiges Verfahren geht aus der deutschen Patentschrift 196 18 370 hervor. Hier wird ein die Außenkontur des Kanals aufweisender Kern zwischen der Außenfläche des Innenrohrs und der Wölbung des Materialstreifens angeordnet, welcher nach dem Aushärten der Isoliermasse aus dem auf diese Weise ausgebildeten Kanal herausgezogen wird.

Werden mehrere Kanäle benötigt, so können mehrere gewölbte Abschnitte in dem Materialstreifen zur Bildung jeweils eines Kanals vorgesehen werden.

Der in dem beschriebenen Stand der Technik genannte Kanal dient vorzugsweise der Aufnahme eines länglichen elektrischen Heizleiters, der in den entlang des Innenrohrs verlaufenden Kanal eines fertig erstellten, isolierten Rohrabschnittes eingeschoben wird. Alternativ kann der Kanal zur Ermittlung von Leckagen des Innenrohrs mit Luft durchspült werden, wobei die aus dem Kanal entnommene Luft analysiert wird, um Restbestände von aus dem Innenrohr entwichenen Substanzen zu ermitteln. In diesem Fall kann der Materialstreifen auch in Anlehnung an die deutsche Patentschrift 40 39 863 schlauchförmig ausgebildet sein und den gesamten Umfang des Innenrohrs umfassen.

Aufgabe der Erfindung ist es, ein vorteilhaftes Verfahren zur teilautomatischen oder vollautomatischen Erzeugung eines Kanals einer wärmegedämmten Rohrleitung zu schaffen.

Diese Aufgabe wird erfindungsgemäß dadurch gelöst, daß der Materialstreifen von einer Vorratsrolle abgezogen wird, in die gewölbte Form umgeformt wird und seine seitlichen Abschnitte mittels seitlich der Wölbung befindlicher Andrückelemente gegen die Außenfläche des Innenrohres gedrückt werden, wobei eine Verbindungsvorrichtung zumindest abschnittsweise eine stoffschlüssige Verbindung zwischen den seitlichen Abschnitten des Materialstreifens und der Außenfläche des Innenrohres erzeugt.

Ein wesentliches Merkmal des Verfahrens besteht aus der Verwendung der Andrükkelemente, welche ein flächiges Anliegen der seitlichen Abschnitte des Materialstreifens an der Außenfläche des Innenrohrs bewirken, sowie aus der Verwendung einer Verbindungsvorrichtung, welche durch stoffschlüssige Verbindung (z.B. Kleben, Löten oder Schweißen) den Materialstreifen zumindest während des Vorgangs des Umschäumens an dem Innenrohr fixiert. Die Andrückelemente ermöglichen weiterhin die Ausbildung eines scharfen Knicks zwischen dem mittleren gewölbten Bereich und dem seitlichen Abschnitt des Materialstreifens. So wird ein gerundeter Übergang zur Oberfläche des Innenrohrs vermieden, der zu zwickelartigen Bereichen in den seitlichen Abschnitten des durch den Materialstreifen gebildeten Kanals führen würde. Derartige Zwickel sind nachteilig, da beim Einziehen eines länglichen Elementes, beispielsweise eines länglichen elektrischen Heizleiters, sich dieses längliche Element in den Zwickel hineinbewegen und hier festklemmen könnte.

Außerdem wird durch die stoffschlüssige Verbindung vermieden, daß die fließfähige, aushärtende Isoliermasse, in der Regel ein aushärtender Polyurethanschaum, unter die seitlichen Abschnitte des Materialstreifens fließt und in den auszubildenden Kanal eindringt. Der Materialstreifen wird von einer Vorratsrolle abgezogen, so daß nicht für jeden Herstellungsvorgang ein separater Materialstreifen konfektioniert und bereitgestellt werden muß.

Da nach dem Aushärten der Isoliermasse der Kanal durch die Isoliermasse an dem Innenrohr festgehalten wird, kann es ausreichend sein, daß die stoffschlüssige Verbindung nur für die Dauer des Umschäumens bis zum Aushärten der Isoliermasse eine gewisse Haftkraft verleiht.

Wenn der Kanal als "Schnüffelkanal" genutzt werden soll, um aus dem Innenrohr austretende Substanzen zu ermitteln, sollte die stoffschlüssige Verbindung nur punktweise oder abschnittsweise erfolgen, so daß Leckagen aus dem Innenrohr außerhalb des Bereichs der Wölbung durch die Unterbrechungen der stoffschlüssigen Verbindung in den Kanal eindringen können.

Die Wölbung des Kanals ist dem jeweiligen Einsatzzweck anzupassen. Sie kann auch Kanten oder einen rechteckigen Querschnitt aufweisen.

Insbesondere sind Schweißnähte des Innenrohres anfällig für Leckagen. Es kann daher sinnvoll sein, die Wölbung des Materialstreifens oberhalb einer Schweißnaht des Innenrohrs anzuordnen. Soll ausschließlich an der Schweißnaht eine Leckageüberwachung stattfinden, ist eine durchgehende Verbindung, insbesondere Verklebung, der Randstreifen mit dem Innenrohr vorzusehen.

Bei einer vorteilhaft einfachen Verfahrensvariante wird die stoffschlüssige Verbindung durch zwei Klebestreifenspender erzeugt, die jeweils einen Klebestreifen von einer Klebebandrolle abziehen und entlang jeweils eines Seitenrandes des Materialstreifens aufbringen. Der Klebestreifen haftet dann teilweise auf der Außenseite des Materialstreifens und teilweise auf der Außenfläche des Innenrohrs. Alternativ kann auch ein breiter Klebestreifen von einer Klebebandrolle abgezogen werden, der Breiter ist als der Materialstreifen. Die seitlichen Bereiche des breiten Klebestreifens ragen über die seitlichen Abschnitten des Materialstreifens hinaus und haften auf dem Innenrohr.

Wird ein Materialstreifen aus einem dem Material des Innenrohrs ähnlichen Material verwendet, kann die stoffschlüssige Verbindung durch Verschweißen hergestellt werden. Dies gilt beispielsweise bei einem Materialstreifen aus Stahlblech und einem Innenrohr aus Stahl. Ein Materialstreifen aus Kunststoff kann an der Unterseite seiner Randstreifen aufgeschmolzen und an das Innenrohr aus beliebigem Material angedrückt werden, wobei der erkaltende Kunststoff mit der Oberfläche des Innenrohrs verklebt.

Es kann auch eine Klebstoffschicht auf die seitlichen Randstreifen mittels einer Klebstoff-Auftragvorrichtung aufgetragen werden. Dies kann entweder durch Aufsprühen einer fließfähigen Klebstoffmasse oder durch Aufkleben eines zweiseitigen Klebestreifens auf die Unterseite der seitlichen Randstreifen erfolgen. Die Klebstoff-Auftragvorrichtung kann auch von der Vorrichtung zur Erzeugung des Kanals örtlich getrennt werden. In diesem Fall wird der Materialstreifen mit dem Klebstoff auf der Unterseite seiner Randstreifen versehen und zu einer Rolle aufgerollt. Diese Rolle wird dann zur Vorrichtung zum Aufbringen des Kanals transportiert, wo der Materialstreifen abgerollt und in gewölbter Form auf das Innenrohr aufgedrückt wird.

Das Haftmittel, insbesondere der Kleber, ist auf der gegen das Innenrohr anliegenden Seite der seitlichen Abschnitte des Materialstreifens aufzubringen. Wenn der zu erzeugende Kanal zur Aufnahme eines Heizleiters bestimmt ist, ist es vorteilhaft, einen Klebstoff mit hoher Wärmeleitfähigkeit zu verwenden, damit die nach außen in den Materialstreifen eingeleitete Wärme des Heizleiters zunächst in der Ebene des Materialstreifens übertragen und an dessen Rand über den wärmeleitenden Kleber in das Innenrohr eingeleitet wird.

Alternativ kann der Kleber auf die Bereiche des Innenrohrs aufgebracht werden, auf denen die seitlichen Abschnitte des Materialstreifens aufliegen.

Damit sichergestellt ist, daß der Kleber vor dem Umschäumen des Innenrohrs mit dem Kanal schon abgebunden hat, ist es hilfreich, einen thermisch abbindenden Kleber zu verwenden und die Andrückelemente zu beheizen. Die Wärmezufuhr über die fest gegen die seitlichen Abschnitte des Materialstreifens gedrückten Andrückelemente bewirkt das Abbinden des Klebers oder ggf. ein Aufschmelzen des Klebers und anschließendes Abbinden durch Erkalten, so daß hinter den Andrückelementen eine stoffschlüssige Verbindung besteht.

Bei einer einfachen Ausführungsform werden als Andrückelemente Profilkörper verwandt, welche mit einer definierten Andrückkraft gegen die Oberfläche des Innenrohrs gedrückt werden und unter denen der Materialstreifen hindurchgezogen wird.

Bei einer bevorzugten Ausführungsform der Erfindung erfolgt das Andrücken mittels einer Profilwalze, welche im mittleren Bereich eine konkave Aussparung zur Aufnahme des gewölbten Bereichs des Materialstreifens aufweist und deren seitliche Abschnitte auf den seitlichen Abschnitten des auf dem Innenrohr aufliegenden Materialstreifens abrollen. Auch zwei Einzelrollen, deren Mittelebene im wesentlichen in jeweils einer radialen Ebene des Innenrohrs verlaufen, sind verwendbar, wobei durch die getrennt von einander federnd gegen die Wandung des Innenrohrs gedrückten Einzelrollen auch bei ungleichmäßigen Oberflächen ein sicheres Andrücken jedes der beiden Randstreifen gewährleistet ist.

Zur Ausbildung der Form des Materialstreifens kann eine beliebige Umformvorrichtung verwendet werden, welche den von der Vorratsrolle abgezogenen Materialstreifen in der Mitte wölbt. Bei der Verwendung einer Profilwalze kann ein Formkörper verwendet werden, der den Materialstreifen in die konkave Aussparung an der Umfangsfläche der Profilwalze hineindrückt. Dieser Formkörper ist vorzugsweise als zweite Profilwalze ausgebildet, deren Umfangsquerschnitt zu dem der ersten Profilwalze komplementär ist.

Zur Ausbildung des Kanals kann ein Materialstreifen verwendet werden, der eine eigene Formbeständigkeit aufweist. Beispielsweise kann Weißblech mit einer Stärke von mehreren zehntel Millimetern oder ein Kunststoffband mit größerer Dicke (im Millimeterbereich) verwendet werden, dessen Wölbung durch den Druck beim Einfüllen und Aushärten der Isoliermasse nicht verformt wird.

Vorzugsweise wird jedoch ein folienartiger Materialstreifen verwendet, der keine Beständigkeit gegen Druckkräfte aufweist. In diesem Fall wird beim Aufdrücken des Materialstreifens gemäß dem Stand der Technik ein länglicher Kern auf die Außenfläche des Innenrohrs aufgelegt, der innerhalb der Wölbung des Materialstreifens verläuft und der nach dem Einfüllen und Aushärten der Isoliermasse aus der Wölbung des Materialstreifens ausgezogen wird. Auf den länglichen Kern kann ein Gleitmittel aufgebracht werden. Die Kernform bestimmt die Form der Wölbung des Materialstreifens, die auch eine eckige Querschnittskontur aufweisen kann.

Das erfindungsgemäße Herstellungsverfahren unter Verwendung eines Kerns kann entweder diskontinuierlich oder kontinuierlich ausgeführt werden. Bei der diskontinuierlichen Verfahrensdurchführung wird zunächst
a) ein Rohrabschnitt mit einer bestimmten Länge mit mindestens einem Materialstreifen mit einliegendem Kern, dessen Länge der Länge des Materialstreifens entspricht, versehen,
b) der Rohrabschnitt in ein Mantelrohr eingebracht,
c) der Zwischenraum zwischen Innenrohr und Mantelrohr mit Isoliermasse ausgeschäumt und
d) nach dem Aushärten der Isoliermasse der gesamte Kern aus dem durch die Wölbung des Materialstreifens gebildeten Kanal ausgezogen.

Der Kern kann entweder - wie der Materialstreifen - von einer Rolle abgezogen und abgeschnitten werden. Alternativ kann der Kern bereits in der benötigten Länge zur Verfügung gestellt werden. Nach dem Ausziehen aus der Wölbung ist der Kern in aller Regel wieder verwendbar für einen nächsten Herstellungsvorgang.

Bei einem kontinuierlichen Herstellungsverfahren wird ein Kern verwendet, der in einer bestimmte Länge auf dem Innenrohr aufliegt und kontinuierlich relativ zur Außenfläche des Innenrohrs bewegt wird. Beispielsweise kann das Innenrohr in einer kombinierten Kanalausbildungs- und Ummantelungsvorrichtung zunächst mit dem Kanal und anschließend mit dem Mantelrohr versehen werden. Z.B. kann ein Kunststoff-Mantelrohr als Kunststoffband zugeführt werden, der um das Innenrohr gelegt und an seinen Rändern zur Bildung eines Kunststoff-Folienschlauchs, welcher das Mantelrohr bildet, verschweißt wird. Das zu verschäumende Kunststoffgemisch wird kurz vor dem Zusammenfügen und Zusammenschweißen der Ränder des zu dem Kunststoff-Folienschlauch geformten Kunststoffbandes auf dieses Kunststoffbandes aufgetragen. Ein derartiges Verfahren ist beispielsweise in der Beschreibungseinleitung des deutschen Gebrauchsmusters 85 24 199 beschrieben.

Das erfindungsgemäße Verfahren kann mit diesem kontinuierlichen Herstellungsverfahren kombiniert werden, indem vor dem Anbringen des Mantelrohrs der Materialstreifen zur Bildung des Kanals aufgebracht wird.

Bei dem kontinuierlich hergestellten isolierten Rohr verläuft auch die Aufbringung des gewölbten Materialstreifens kontinuierlich. Er wird in einem Abschnitt kurz vor der Umhüllung des Innenrohrs mit dem Mantelrohr aufgebracht, wobei sein mittlerer gewölbter Abschnitt auf dem länglichen Kern aufliegt. Beim Vorwärtsbewegen des Innenrohrs bewegt sich der Materialstreifen in Längsrichtung des Innenrohrs mit und gleitet dabei entlang dem länglichen Kern. Bei der Ummantelung wird die Isoliermasse in das Mantelrohr eingebracht und härtet aus. Der längliche Kern, der im Gegensatz zum Innenrohr ortsfest ist, endet in einer Zone, in der das Aushärten der Isoliermasse weitgehend abgeschlossen ist. Der längliche Kern kann in diesem Fall beispielsweise von einer Stahlstange mit den Konturen der Wölbung des Kanals gebildet werden.

In dem ersten Fall der diskontinuierlichen Herstellung wird vorteilhafterweise die Aufbringvorrichtung mit den Andrückelementen für den Materialstreifen sowie die Verbindungsvorrichtung entlang eines ortsfesten Innenrohrabschnittes zum Aufbringen des Materialstreifens verschoben. Dies kann mit Hilfe einer manuellen oder einer automatisch betätigten Vorrichtung erfolgen. Beim kontinuierlichen Herstellungsverfahren wird vorteilhafterweise das Innenrohr durch eine feststehende Aufbringvorrichtung/Verbindungsvorrichtung verschoben, die vor der Ummantelungsvorrichtung angeordnet ist.

Die Aufbringvorrichtung und die Verbindungsvorrichtung können drehbar gehalten sein, entweder um Dreh- oder Schwenkbewegungen des Innenrohrs beim kontinuierlichen Herstellungsverfahren zu folgen oder um einen schraubenlinienförmigen Kanal an der Außenseite des Innenrohrs zu erzeugen.

Schließlich kann auf die Außenseite des verformbaren Materialstreifens zumindest im Bereich seiner Wölbung ein elastisch verformbares, geschäumtes Kunststoffmaterial, z.B. in Form eines selbstklebenden Schaumstoffstreifens, aufgebracht werden. Dieses elastische Kunststoffmaterial wird beim Ausschäumen des Zwischenraumes zwischen dem Innenrohr und dem Mantelrohr durch den entstehenden Druck von der aushärtenden Isoliermasse komprimiert. Der Kanal wird dabei von dem Kern offengehalten. Beim Ausziehen des Kerns nach dem Aushärten der Isoliermasse kann sich das elastische Kunststoffmaterial entspannen, so daß die durch den Materialstreifen erzeugte Wandung des Kanals zur Außenwand des Innenrohres hin gedrückt wird. Beim Einziehen eines Heizleiters in diesen zusammengedrückten Kanal wird die Kanalöffnung wieder erweitert, wobei die elastische Rückstellkraft des elastischen Schaumstoffes den eingezogenen Heizleiter fest gegen die Außenwand des Innenrohres drückt. Auf diese Weise ist ein guter Kontakt und damit ein guter Wärmeübergang zwischen dem eingezogenen Heizleiter und dem Innenrohr sichergestellt, auch wenn die Kontur des Heizleiters von der Kontur des kanalbildenden Kerns abweicht.

Weitere Vorzüge und Merkmale der Erfindung ergeben sich aus den Unteransprüchen und aus der folgenden Zeichnungsbeschreibung. Die Zeichnungen zeigen in:
- Fig. 1: eine räumliche Darstellung eines Abschnittes einer nach dem erfindungsgemäßen Verfahren hergestellten Rohrleitung,
- Fig. 2: die Seitenansicht einer Vorrichtung zur Herstellung der Rohrleitung nach Fig. 1,
- Fig. 3: die Draufsicht auf die Vorrichtung aus Fig. 2,
- Fig. 4: die Rückansicht der Vorrichtung aus Fig. 2 in entlang der Schnittlinie IV-IV geschnittener Darstellung,
- Fig. 5: die Seitenansicht einer weiteren Vorrichtung zur Durchführung des erfindungsgemäßen Herstellungsverfahrens,
- Fig. 6, 7 und 8: eine gemäß den Schnittlinien VI-VI, VII-VII bzw. VIII-VIII geschnittene Darstellung der Vorrichtung aus Fig. 5 und
- Fig. 9: eine geschnittene Vorderansicht eines gemäß einer weiteren Ausführungsform des erfindungsgemäßen Verfahren hergestellten Kanals.

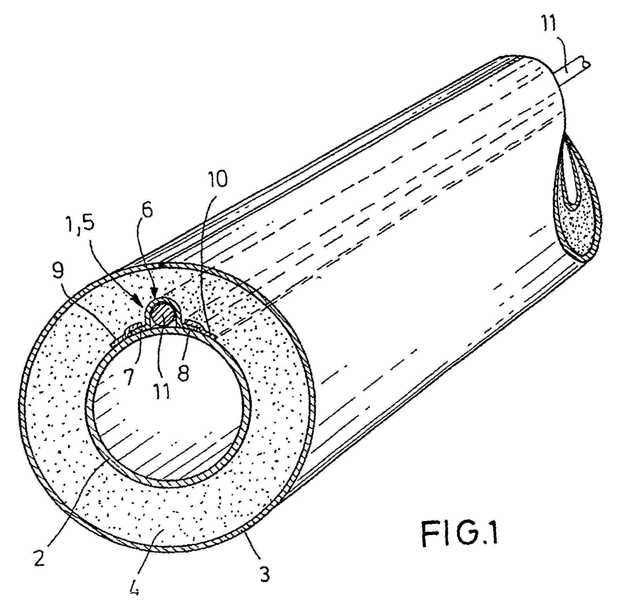

Die Fig. 1 zeigt eine räumliche Darstellung eines gemäß dem erfindungsgemäßen Verfahren hergestellten Rohrabschnittes mit einem Kanal 1, der auf einem Innenrohr 2 angebracht ist, welches von einem Mantelrohr 3 umhüllt ist, wobei zwischen dem Innenrohr 2 und dem Mantelrohr 3 eine ausgehärtete Isoliermasse 4, insbesondere ein ausgehärteter Polyurethan-Schaum eingebracht ist. Das Mantelrohr 3 besteht im vorliegenden Fall aus einem Kunststoffrohr, welches durch Umhüllung des Innenrohrs 2 mit einem in eine zylindrische Form gebrachten Kunststoffstreifen und Verschweißen der aneinandergrenzenden Längskanten des Kunststoffstreifens hergestellt wurde. Das Innenrohr 2 kann in das Mantelrohr 3 eingeschoben werden. Es kann auch kontinuierlich mit dem Mantelrohr umhüllt werden. Selbstverständlich ist auch die Verwendung anderer Mantelrohre, z.B. aus Metall denkbar. Ein Mantelrohr 3 aus flexiblem Material kann seine endgültige Gestalt und seinen Widerstand gegen Verformung durch die aushärtende Isoliermasse 4 erhalten.

Der Kanal 1 besteht aus einem dünnwandigen Materialstreifen 5, der einen in Form eines Ω gebogenen Querschnitt mit einem mittleren gewölbten Abschnitt 6 und zwei seitlichen Abschnitten 7,8 aufweist. Die seitlichen Abschnitte 7,8 sind mit jeweils einem Klebestreifen 9,10 an dem Innenrohr 2 festgeklebt. Jeder Klebestreifen 9,10 haftet teilweise auf der Außenseite eines seitlichen Abschnittes 7,8 und teilweise auf der Außenseite des Innenrohrs 2.

In dem durch den Materialstreifen 5 gebildeten Kanal 1 ist ein länglicher runder Körper zu erkennen, der von einem beim Herstellungsverfahren aufgebrachten Kern 11 aus gummiartigem Material gebildet wird. Der Kern 11 wird nach dem Herstellen des Rohrleitungsabschnittes aus dem Kanal 1 herausgezogen, und es kann anschließend ein länglicher elektrischer Heizleiter in den Kanal 1 eingeschoben werden.

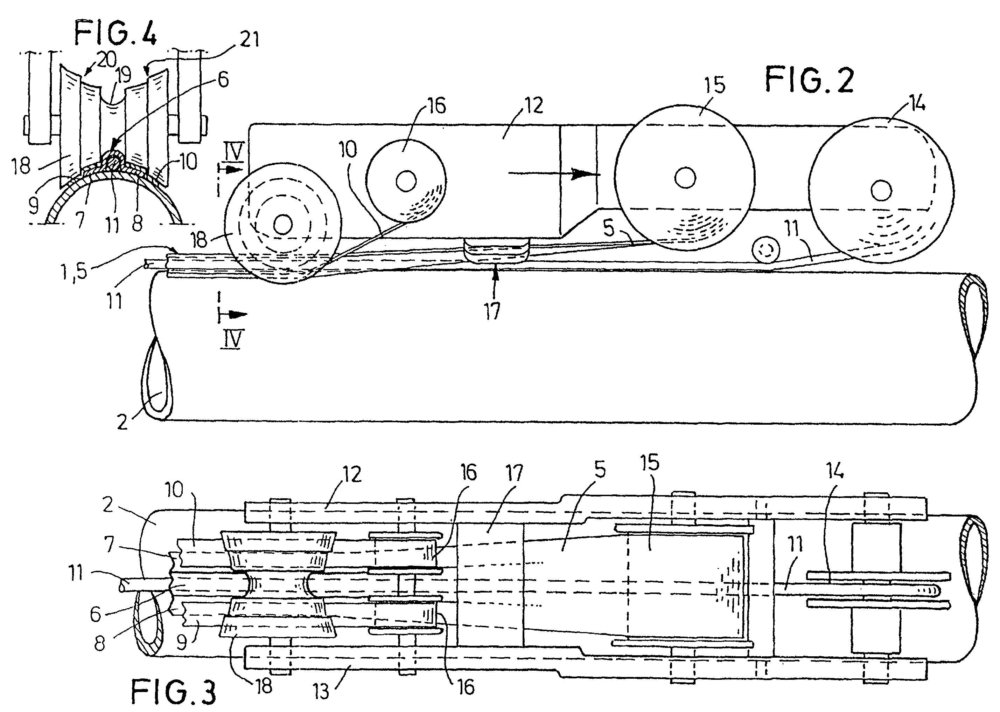

Die Fig. 2 bis 4 zeigen eine Vorrichtung zur Aufbringung des Kanals 1 für die Aufnahme eines Heizkörpers auf dem Innenrohr 2. An zwei parallelen Trägerbalken 12,13 ist eine Vorratsrolle 14, auf der der Kern 11 aufgewickelt ist, sowie eine Vorratsrolle 15 für den Materialstreifen 5 angeordnet. Weiterhin sind zwei nebeneinander angeordnete Klebebandrollen 16 vorgesehen. Ein Führungskörper 17 verleiht dem Materialstreifen 5 einen im wesentlichen Ω-förmigen Querschnitt. Eine Profilwalze 18 drückt alle zugeführten Endlos-Materialien (Kern 11, Materialstreifen 5 und Klebestreifen 9,10) auf die Außenfläche des Innenrohrs 2. Die Profilwalze 18 weist in ihrer Umfangsfläche eine mittlere konkave Aussparung 19 auf, welche bei der Herstellung des Kanals den mittleren gewölbten Abschnitt 6 des Materialstreifens 5 definiert. Die beiden seitlichen Abschnitte 20,21 der Profilwalze 18 rollen auf der Oberfläche des Innenrohrs 2, dem darauf liegenden Materialstreifen 5 sowie den auf dem Materialstreifen 5 und der Außenfläche des Innenrohrs 2 aufliegenden Klebestreifen 7,8 ab. Die seitlichen Abschnitte 20,21 der Profilwalzen bilden somit Andrückelemente, welche die seitlichen Abschnitte 7,8 des Materialstreifens 5 gegen dem Außenfläche des Innenrohrs 2 drücken und gleichzeitig mittels der Klebestreifen 9,10 mit diesem verkleben. Alternativ zu den zwei separaten Klebestreifen 9,10 kann selbstverständlich ein breiter Klebestreifen verwendet werden, der über die beiden seitlichen Abschnitte 7,8 des Materialstreifens hinausragt.

Wie in Fig. 2 erkennbar, wird die gesamte an den Trägerbalken 12,13 befestigte Vorrichtung zur Durchführung des erfindungsgemäßen Verfahrens entlang der Längsrichtung des Innenrohrs 2 bewegt. Am Ende eines Abschnittes des Innenrohrs 2 wird der Materialstreifen 5 abgeschnitten. Der wiederverwendbare Kern 11 kann bereits in Abschnitten auf der Vorratsrolle 14 aufgerollt, deren Länge der Länge des Innenrohrs 2 entspricht. Anschließend wird das Innenrohr 2 zusammen mit dem daran angeklebten Kanal 1 und dem darin aufgenommenen Kern 11 mit dem Mantelrohr 3 umhüllt bzw. in dieses eingeschoben, und der Zwischenraum zwischen Mantelrohr 3 und Innenrohr 2 wird mit der Isoliermasse 4 verfüllt (Fig. 1).

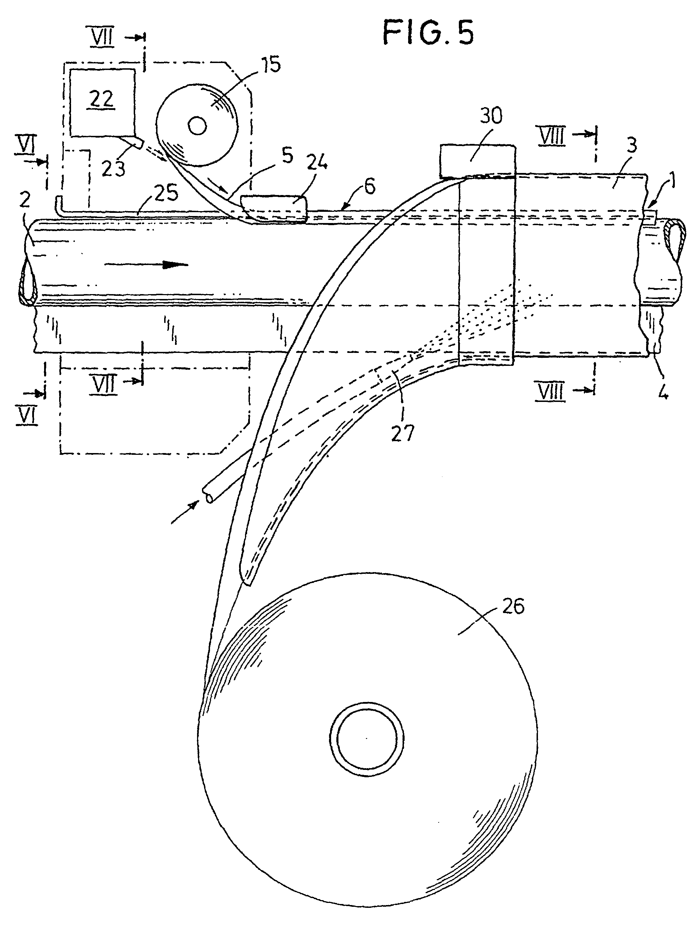

Eine alternative Ausführungsform einer Vorrichtung zur Durchführung des erfindungsgemäßen Verfahrens ist in den Fig. 5 bis 8 dargestellt. Hier wird ein beliebig langes Innenrohr 2 in einem kontinuierlichen Herstellungsverfahren mit dem Kanal 1 sowie mit dem Mantelrohr 3 und der aushärtenden Isoliermasse 4 versehen.

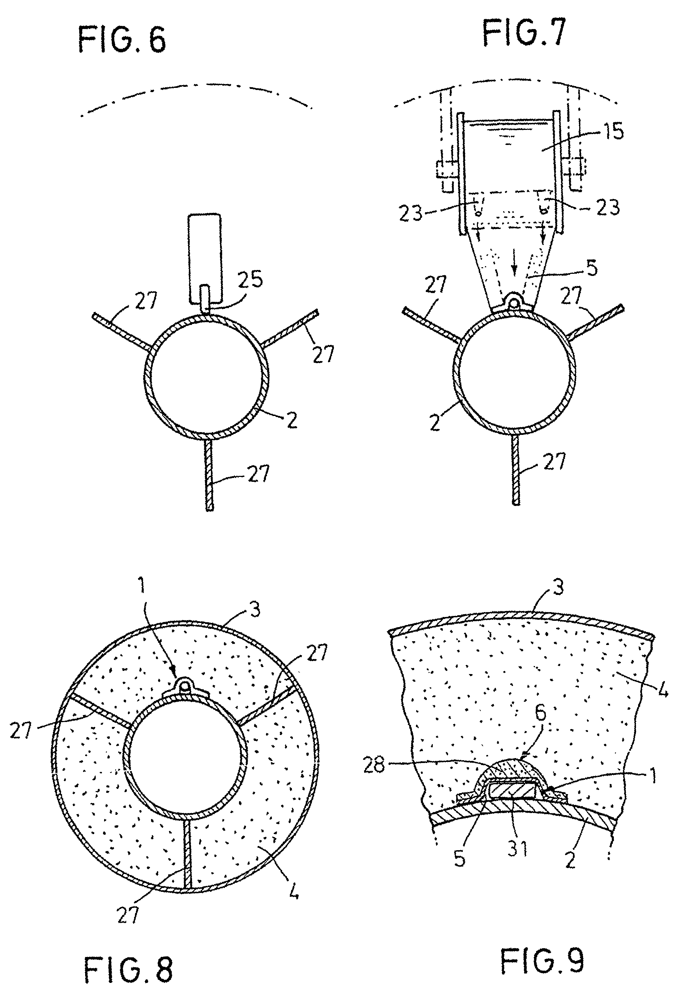

Wieder ist eine Vorratsrolle 15 für den Materialstreifen 5 vorgesehen. In unmittelbarer Nähe zu der Vorratsrolle 15 ist eine Klebstoff-Auftragsvorrichtung 22 angebracht, die zwei Klebstoff-Auftragsdüsen 23 (vgl. Fig. 5 und 7) umfaßt, welche einen Klebstoff auf die seitlichen Bereiche der Oberfläche des Materialstreifens 5 sprühen.

Die bei dieser Ausführungsform der Vorrichtung verwendeten Andrückelemente werden von einem Gleitschuh 24 mit zwei gegen die seitlichen Abschnitte 7,8 drückenden Profilkörpern gebildet. In der Mitte weist der Gleitschuh 24 eine Ausnehmung zur Aufnahme des mittleren gewölbten Abschnittes 6 des Materialstreifens 5 auf. Der Gleitschuh 24 ist beheizt, und der durch die Klebstoff-Auftragsdüsen 23 aufgetragene Klebstoff bindet unter Hitze ab, so daß hinter dem Gleitschuh 24 der Kanal 1 fest mit der Oberfläche des Innenrohrs 2 verbunden ist.

Im vorliegenden Fall wird ein länglicher gerader Kern 25 aus Metall verwendet. Der Gleitschuh 24 drückt den Materialstreifen 5 zur Ausbildung des Kanals 1 um diesen Kern 25 herum.

Da vorzugsweise bei dem erfindungsgemäßen Herstellungsverfahren ein Materialstreifen 5 aus folienartigem Material verwendet wird, erstreckt sich der Kern 25 bis in den Bereich, in dem die Ausschäumung des Zwischenraums zwischen Mantelrohr 3 und Innenrohr 2 mit aushärtender Isoliermasse 4 abgeschlossen und die Isoliermasse 4 ausgehärtet ist. Eine derart arbeitende Vorrichtung ist in der Fig. 5 dargestellt. Besteht der Materialstreifen 5 zur Bildung des Kanals 1 aus steiferem Material, etwa Weißblech oder Aluminiumblech, kann der Kern 25 im hinteren Bereich des Gleitschuhs 24 oder kurz dahinter enden.

In der in Fig. 5 erkennbaren Darstellung schließt sich an die Kanal-Auftragsvorrichtung eine Ummantelungsvorrichtung an. Von einer Vorratsrolle 26 wird ein Kunststoffstreifen abgezogen und mittels eines Führungsbleches um das Innenrohr 2 geführt. Die beiden aneinanderstoßenden Längskanten des Kunststoffstreifens werden mit einem Schweißkopf 30 oberhalb des Innenrohrs 2 miteinander verschweißt. Im Bereich vor dem Schweißkopf 30 ist eine Einspritzdüse 27 angeordnet, mit der fließfähige Polyurethan-Schaummasse in den Zwischenraum zwischen dem neu gebildeten Mantelrohr 3 und dem Innenrohr 2 eingespritzt wird. Das Polyurathan schäumt nach dem Einspritzen auf, bindet ab und bildet die ausgehärtete Isoliermasse 4. Bei bedarf kann eine breite Einspritzdüse oder können mehrere Einspritzdüsen 27 nebeneinander vorgesehen sein, so daß auf der gesamten Breite des Kunststoffstreifens zur Bildung des Mantelrohrs 3 Polyurethan-Schaummasse gleichmäßig aufgetragen wird. In dem Bereich der Aushärtung liegt das Ende des Kerns 25 innerhalb des Kanals 1.

Wie in den Fig. 6 bis 8 erkennbar, sind auf dem Innenrohr 2 radiale Abstandshalter 27 angebracht, welche in der Regel als Strebe ausgebildet sind und eine Verbindung zwischen dem Mantelrohr 3 und dem Innenrohr 2 schaffen.

Die in den Fig. 5 bis 7 dargestellte Haltevorrichtung für die Vorratsrolle 15 mit dem Materialstreifen 5, dem Gleitschuh 24 und der Klebstoff-Auftragsvorrichtung 22 kann auch dreh- oder schwenkbar gehalten sein, wenn das Innenrohr 2 bei der Ummantelung Dreh- oder Schwenkbewegungen um die eigene Achse ausführt oder wenn ein wendelförmig verlaufender Kanals aufgebracht werden soll.

Fig. 9 zeigt einen nach dem erfindungsgemäßen Verfahren aufgebrachten Kanal 1, bei dem zwischen dem Materialstreifen 5 und der ausgehärteten Isoliermasse 4 ein elastisch verformbares, geschäumtes Kunststoffmaterial 28 aufgebracht ist. Beim Aufschäumen und Aushärten der Isoliermasse 4 wird dieses Kunststoffmaterial 28 durch den Druck, der sich in der schäumenden Isoliermasse 4 entwickelt, komprimiert. Nach dem aushärten der Isoliermasse 4 und dem Ausziehen des Kerns 11 kann das elastische Kunststoffmaterial 28 entspannen, so daß es die Wandung des entstandenen Kanals 1 auf das Innenrohr 2 zu drückt. Ein in den Kanal 1 eingeschobener, im Querschnitt rechteckiger Heizleiter 31 wird hierdurch elastisch gegen das Innenrohr 2 gedrückt, so daß ein guter Kontakt und ein guter Wärmeübergang zwischen der Unterseite des Heizleiters 31 und dem Innenrohr 2 sowie zwischen der Oberseite des Heizleiters 31 und dem Materialstreifen 5 entsteht. Der Materialstreifen 5, der vorzugsweise aus einer Metallfolie besteht, leitet die Wärme in seine in denen er Kontakt mit dem Innenrohr 2 hat, und über die Randbereiche wiederum in die Wandung des Innenrohrs 2 ein.

### Bezugszeichenliste:

- 1: Kanal
- 2: Innenrohr
- 3: Mantelrohr
- 4: Isoliermasse
- 5: Materialstreifen
- 6: gewölbter Abschnitt, Wölbung
- 7: seitlicher Abschnitt
- 8: seitlicher Abschnitt
- 9: Klebestreifen
- 10: Klebestreifen
- 11: Kern
- 12: Trägerbalken
- 13: Trägerbalken
- 14: Vorratsrolle
- 15: Vorratsrolle
- 16: Klebebandrolle
- 17: Führungskörper
- 18: Profilwalze
- 19: konkave Aussparung
- 20: seitlicher Abschnitt der Profilwalze
- 21: seitlicher Abschnitt der Profilwalze
- 22: Klebstoff-Auftragsvorrichtung
- 23: Klebstoff-Auftragsdüse
- 24: Gleitschuh
- 25: Kern
- 26: Vorratsrolle
- 27: radiale Abstandshalter
- 28: elastisches Kunststoffmaterial
- 29: Führungsblech
- 30: Schweißkopf
- 31: Heizleiter

## Patentansprüche

1. Verfahren zur Erzeugung eines Kanals (1) einer wärmegedämmten Rohrleitung, bei dem auf einem Innenrohr (2) mindestens ein entlang der Außenfläche des Innenrohrs (2) verlaufender Kanal (1) aus einem vorzugsweise metallischen Materialstreifen (5) ausgebildet wird, welcher mindestens einen mittleren, gewölbten Abschnitt (6) sowie zwei auf der Außenfläche des Innenrohrs (2) aufliegende seitliche Abschnitte (7,8) aufweist, wobei das Innenrohr (2) mit dem Kanal (1) in ein Mantelrohr (3) eingebracht wird und der Zwischenraum zwischen dem Innenrohr (2) mit dem Kanal (1) und dem Mantelrohr (3) mit einer fließfähigen, aushärtenden Isoliermasse (4) verfüllt wird, **dadurch gekennzeichnet, daß** der Materialstreifen (5) von einer Vorratsrolle (15) abgezogen wird, in die gewölbte Form umgeformt wird und seine seitlichen Abschnitte (7,8) mittels seitlich der Wölbung (6) befindlicher Andrückelemente (20,21;24) gegen die Außenfläche des Innenrohres (2) gedrückt werden, wobei eine Verbindungsvorrichtung zumindest abschnittsweise eine stoffschlüssige Verbindung zwischen den seitlichen Abschnitten (7,8) des Materialstreifens (5) und der Außenfläche des Innenrohres (2) erzeugt.

2. Verfahren nach Anspruch 1, **dadurch gekennzeichnet, daß** die Verbindungsvorrichtung zur Befestigung der seitlichen Abschnitte einen Klebestreifenspender umfaßt, der zwei Klebestreifen (9,10) von zwei Klebebandrollen (16) abzieht und entlang jeweils eines Seitenrandes eines der seitlichen Abschnitte (7 bzw. 8) des Materialstreifens aufbringt, wobei jeder Klebestreifen (9 bzw. 10) teilweise auf einem seitlichen Abschnitt (7 bzw. 8) und teilweise auf dem Innenrohr (2) haftet.

3. Verfahren nach Anspruch 1, **dadurch gekennzeichnet, daß** die Verbindungsvorrichtung zur Befestigung der seitlichen Abschnitte einen Klebestreifenspender umfaßt, der einen Klebestreifen von einer Klebebandrolle abzieht auf den Materialstreifen derart aufbringt, wobei daß die seitlichen Bereiche des Klebestreifens über die seitlichen Abschnitten (7 bzw. 8) des Materialstreifens hinausragen und auf dem Innenrohr (2) haften.

4. Verfahren nach Anspruch 1, **dadurch gekennzeichnet, daß** die Verbindungsvorrichtung Schweißvorrichtungen umfaßt, welche die seitlichen Abschnitte (7,8) des metallischen Materialstreifens (5) mit der Außenfläche des Innenrohres (2) zumindest punktweise verschweißen.

5. Verfahren nach Anspruch 1, **dadurch gekennzeichnet, daß** die Verbindungsvorrichtung eine Klebstoff-Auftragsvorrichtung (22) umfaßt, welche die seitlichen Abschnitte (7,8) des Materialstreifens (5) auf der gegen das Innenrohr (2) anliegenden Seite zumindest abschnittsweise mit einem Klebstoff beschichtet.

6. Verfahren nach Anspruch 5, **dadurch gekennzeichnet, daß** ein Klebstoff mit hoher Wärmeleitfähigkeit verwendet wird.

7. Verfahren nach Anspruch 5 oder 6, **dadurch gekennzeichnet, daß** ein thermisch abbindender Klebstoff verwendet wird und daß die Andrückelemente (24) beheizt werden.

8. Verfahren nach Anspruch 1, **dadurch gekennzeichnet, daß** die Andrückelemente von seitlich der Wölbung (6) des Materialstreifens (5) angeordneten und gegen die Oberfläche des Innenrohrs (2) drückenden Profilkörpern gebildet werden, unter denen der Materialstreifen (5) hindurchgezogen wird.

9. Verfahren nach Anspruch 1, **dadurch gekennzeichnet, daß** die Andrückelemente von seitlich der Wölbung (6) des Materialstreifens (5) angeordneten und gegen die Oberfläche des Innenrohrs (2) drückenden Einzelrollen gebildet werden, unter denen der Materialstreifen (5) hindurchgezogen wird.

10. Verfahren nach Anspruch 1, **dadurch gekennzeichnet, daß** die Andrückelemente von den seitlichen Abschnitten (20,21) einer Profilwalze (18) mit konkaver Aussparung (19) in der Umfangsfläche gebildet werden, wobei die seitlichen Abschnitten (20,21) der Profilwalze (18) auf dem auf der Oberfläche des Innenrohrs (2) aufliegenden Materialstreifen (5) abrollen.

11. Verfahren nach Anspruch 10, **dadurch gekennzeichnet, daß** zur Umformung des Materialstreifens (5) ein Formkörper den von der Vorratsrolle (15) abgezogenen Materialstreifen (5) gegen die Oberfläche der Profilwalze (18) drückt, welche zwischen ihren seitlichen Abschnitten (20,21) eine zur Wölbung (6) des Materialstreifens (5) komplementäre Aussparung (19) aufweist.

12. Verfahren nach Anspruch 11, **dadurch gekennzeichnet, daß** der Formkörper eine zweite Profilwalze ist, deren Umfangsquerschnitt zu dem der ersten Profilwalze komplementär ist.

13. Verfahren nach einem der vorangehenden Ansprüche, **dadurch gekennzeichnet, daß** auf das Innenrohr (2) ein länglicher Kern (11,25) auf die Außenfläche des Innenrohrs (2) aufgelegt wird, auf den der Materialstreifen (5) zur Ausbildung seiner Wölbung (6) aufgedrückt wird.

14. Verfahren nach Anspruch 13, **dadurch gekennzeichnet, daß** der Kern (11,25) erst nach dem Einfüllen und Aushärten der Isoliermasse (4) aus der Wölbung (6) des Materialstreifens (5) ausgezogen wird.

15. Verfahren nach Anspruch 14, **dadurch gekennzeichnet, daß** auf den länglichen Kern (11,25) ein Gleitmittel aufgebracht wird.

16. Verfahren nach einem der Ansprüche 13 bis 15, **dadurch gekennzeichnet, daß**
a) ein Rohrabschnitt mit einer bestimmten Länge mit mindestens einem Materialstreifen (5) mit einliegendem Kern (11), dessen Länge im wesentlichen der Länge des Materialstreifens (5) entspricht, versehen wird,
b) der Rohrabschnitt in ein Mantelrohr (3) eingebracht wird,
c) der Zwischenraum zwischen Innenrohr (2) und Mantelrohr (3) mit Isoliermasse (4) ausgefüllt wird und
d) nach dem Aushärten der Isoliermasse (4) der gesamte Kern (11) aus dem durch die Wölbung (6) des Materialstreifens (5) gebildeten Kanal (1) ausgezogen wird.

17. Verfahren nach einem der Ansprüche 13 bis 15, **dadurch gekennzeichnet, daß** ein Rohrabschnitt kontinuierlich mit einem gewölbten Materialstreifen (5) versehen und mit einem Mantelrohr (3) umhüllt wird, wobei in den umhüllten Bereich aushärtende Isoliermasse (4) eingebracht wird und wobei der Materialstreifen (5) auf einen kontinuierlich entlang der Längsachse des Innenrohrs (2) bewegten länglichen Kern (25) aufgebracht wird.

18. Verfahren nach Anspruch 17, **dadurch gekennzeichnet, daß** der Endbereich des Kerns (25) in der Zone liegt, in der das Aushärten der in den umhüllten Bereich eingebrachten Isoliermasse (4) weitgehend abgeschlossen ist.

19. Verfahren nach einem der vorangehenden Ansprüche, **dadurch gekennzeichnet, daß** eine Aufbringvorrichtung mit den Andrückelementen (20,21) für den Materialstreifen (5) sowie die Verbindungsvorrichtung gemeinsam entlang eines ortsfesten Innenrohrabschnittes (2) bewegt werden.

20. Verfahren nach einem der Ansprüche 1 bis 18, **dadurch gekennzeichnet, daß** eine Aufbringvorrichtung mit den Andrückelementen für den Materialstreifen (5) sowie die Verbindungsvorrichtung unverschiebbar sind und ein Innenrohrabschnitt (2) entlang dieser Vorrichtungen verschoben wird.

21. Verfahren nach Anspruch 20, **dadurch gekennzeichnet, daß** die Aufbringvorrichtung und die Verbindungsvorrichtung drehbar gehalten sind und gemeinsam mit dem hindurchgeschobenen Innenrohrabschnitt (2) um dessen Längsachse gedreht werden.

22. Verfahren nach einem der vorangehenden Ansprüche, **dadurch gekennzeichnet, daß** auf der Außenseite des verformbaren Materialstreifens (5) zumindest im Bereich seiner Wölbung (6) ein elastisch verformbares Bandmaterial, vorzugsweise ein geschäumtes Kunststoffmaterial (28) aufgebracht wird.

## Claims

1. A method for producing a channel (1) in a heat-insulated pipeline, in which at least one channel (1) extending along the outer surface of an inner pipe (2) is constructed on the inner pipe (2) from a strip (5) of preferably metallic material, which comprises at least one central, domed portion (6) together with two lateral portions (7, 8) lying on the outer surface of the inner pipe (2), the inner pipe (2) being introduced with the channel (1) into a jacket pipe (3) and the space between the inner pipe (2) with the channel (1) and the jacket pipe (3) being filled with a flowable, curable insulation compound (4), **characterised in that** the material strip (5) is drawn off from a supply roll (15) and shaped into the domed form and its lateral portions (7, 8) are pressed against the outer surface of the inner pipe (2) by means of pressure members (20, 21; 24) located to the sides of the dome (6), a connecting device producing a material connection between the lateral portions (7, 8) of the material strip (5) and the outer surface of the inner pipe (2) at least in places.

2. A method according to claim 1, **characterised in that** the connecting device for fixing the lateral portions comprises an adhesive strip dispenser, which peels off two adhesive strips (9, 10) from two adhesive tape rolls (16) and applies them in each case along a side edge of one of the lateral portions (7 or 8 respectively) of the material strip, each adhesive strip (9 or 10 respectively) sticking in part to a lateral portion (7 or 8 respectively) and in part to the inner pipe (2).

3. A method according to claim 1, **characterised in that** the connecting device for fixing the lateral portions comprises an adhesive strip dispenser, which peels off an adhesive. strip from an adhesive tape roll and applies it to the material strip in such a way that the lateral areas of the adhesive strip project beyond the lateral portions (7 and 8 respectively) of the material strip and stick to the inner pipe (2).

4. A method according to claim 1, **characterised in that** the connecting device comprises welding devices, which weld the lateral portions (7, 8) of the metallic material strip (5) to the outer surface of the inner pipe (2) at least at points.

5. A method according to claim 1, **characterised in that** the connecting device comprises an adhesive application device (22), which coats the lateral portions (7, 8) of the material strip (5) with an adhesive at least in places on the side resting against the inner pipe (2).

6. A method according to claim 5, **characterised in that** an adhesive with a high level of thermal conductivity is used.

7. A method according to claim 5 or claim 6, **characterised in that** a heat-setting adhesive is used and **in that** the pressure members (24) are heated.

8. A method according to claim 1, **characterised in that** the pressure members take the form of profile members arranged to the sides of the dome (6) in the material strip (5) and pressing against the surface of the inner pipe (2), beneath which profile members the material strip (5) is drawn through.

9. A method according to claim 1, **characterised in that** the pressure members take the form of individual rolls arranged to the sides of the dome (6) in the material strip (5) and pressing against the surface of the inner pipe (2), beneath which individual rolls the material strip (5) is drawn through.

10. A method according to claim 1, **characterised in that** the pressure members consist of the lateral portions (20, 21) of a grooved roll (18) with a concave recess (19) in the circumferential surface, the lateral portions (20, 21) of the grooved roll (18) rolling over the material strip (5) lying on the surface of the inner pipe (2).

11. A method according to claim 10, **characterised in that,** to shape the material strip (5), a shaping member presses the material strip (5) drawn off from the supply roll (15) against the surface of the grooved roll (18), which comprises between its lateral portions (20, 21) a recess (19) complementary to the dome (6) in the material strip (5).

12. A method according to claim 11, **characterised in that** the shaping member is a second grooved roll, the circumferential cross section of which is complementary to that of the first grooved roll.

13. A method according to one of the preceding claims, **characterised in that**, on the inner pipe (2), an elongate core (11, 25) is positioned on the outer surface of the inner pipe (2), onto which core (11, 25) the material strip (5) is pressed to form the dome (6) therein.

14. A method according to claim 13, **characterised in that** the core (11, 25) is extracted from the dome (6) in the material strip (5) only after feeding in and curing of the insulation compound (4).

15. A method according to claim 14, **characterised in that** a lubricant is applied to the elongate core (11, 25).

16. A method according to one of claims 13 to 15,
**characterised in that**
a) a pipe portion of a given length is provided with at least one material strip (5) with enclosed core (11), the length of which corresponds substantially to the length of the material strip (5),
b) the pipe portion is introduced into a jacket pipe (3),
c) the space between inner pipe (2) and jacket pipe (3) is filled with insulation compound (4) and
d) after curing of the insulation compound (4), the entire core (11) is extracted from the channel (1) formed by the dome (6) in the material strip (5).

17. A method according to one of claims 13 to 15, **characterised in that** a pipe portion is provided continuously with a domed material strip (5) and sheathed in a jacket pipe (3), wherein curable insulation compound (4) is introduced into the sheathed area and wherein the material strip (5) is applied to an elongate core (25) moved continuously along the longitudinal axis of the inner pipe (2).

18. A method according to claim 17, **characterised in that** the end area of the core (25) is located in the zone in which curing of the insulation compound (4) introduced into the sheathed area is substantially complete.

19. A method according to one of the preceding claims, **characterised in that** an application device with the pressure members (20, 21) for the material strip (5) and the connecting device are moved jointly along a stationary inner pipe portion (2).

20. A method according to one of claims 1 to 18, **characterised in that** an application device with the pressure members for the material strip (5) and the connecting device are immovable and an inner pipe portion (2) is displaced along these devices.

21. A method according to claim 20, **characterised in that** the application device and the connecting device are supported so as to be rotatable and are rotated together with the inner pipe portion (2) inserted therethrough about the longitudinal axis thereof.

22. A method according to one of the preceding claims, **characterised in that** a resiliently deformable tape material, preferably a foamed plastics material (28), is applied to the outside of the deformable material strip (5) at least in the area of the dome (6) therein.

## Revendications

1. Procédé pour la réalisation d'un canal (1) pour une canalisation isolée thermiquement, dans lequel au moins un canal (1) s'étendant le long de la surface extérieure d'un tube intérieur (2) est formé sur ledit tube intérieur (2) à partir d'une bande (5) faite d'un matériau de préférence métallique et présentant au moins une portion médiane cintrée (6) ainsi que deux portions latérales (7, 8) en appui sur la surface extérieure du tube intérieur (2), le tube intérieur (2) avec le canal (1) étant introduit dans un tube enveloppe (3) et l'espace entre le tube intérieur (2) avec le canal (1) et le tube enveloppe (3) étant rempli d'une masse isolante (4) apte à l'écoulement et durcissable, **caractérisé en ce que** la bande de matériau (5) est prélevée à partir d'une bobine d'alimentation (15), transformée pour lui donner la forme cintrée et **en ce que** ses portions latérales (7, 8) sont plaquées contre la surface extérieure du tube intérieur (2) par le biais d'éléments presseurs (20, 21, 24) qui se trouvent de part et d'autre de la portion cintrée (6), un dispositif de liaison réalisant au moins par tronçons une liaison matérielle positive entre les portions latérales (7, 8) de la bande de matériau (5) et la surface extérieure du tube intérieur (2).

2. Procédé selon la revendication 1, **caractérisé en ce que** le dispositif de liaison pour fixer les portions latérales comprend un distributeur de bandes adhésives qui prélève deux bandes adhésives (9, 10) à partir de deux bobines de bande adhésive (16) et les applique respectivement le long d'un bord latéral de l'une des portions latérales (7 ou 8) de la bande de matériau, chaque bandé adhésive (9 ou 10) adhérant pour partie sur une portion latérale (7 ou 8) et pour partie sur le tube intérieur (2).

3. Procédé selon la revendication 1, **caractérisé en ce que** le dispositif de liaison pour fixer les portions latérales comprend un distributeur de bande adhésive qui prélève une bande adhésive à partir d'une bobine de bande adhésive et l'applique sur la bande de matériau de façon que les zones latérales de la bande adhésive dépassent des portions latérales (7 ou 8) de la bande de matériau et adhèrent sur le tube intérieur (2).

4. Procédé selon la revendication 1, **caractérisé en ce que** le dispositif de liaison comprend des dispositifs de soudage qui soudent au moins par points les portions latérales (7, 8) de la bande de matériau métallique (5) sur la surface extérieure du tube intérieur (2).

5. Procédé selon la revendication 1, **caractérisé en ce que** le dispositif de liaison comprend un dispositif applicateur de colle (22) qui dépose au moins par tronçons une couche adhésive sur les portions latérales (7, 8) de la bande de matériau (5), sur celle de ses faces qui est en contact avec le tube intérieur (2).

6. Procédé selon la revendication 5, **caractérisé en ce que** l'on utilise une colle qui possède une conductibilité thermique élevée.

7. Procédé selon la revendication 5 ou 6, **caractérisé en ce que** l'on utilise une colle à prise à chaud et **en ce que** les éléments presseurs (24) sont chauffés.

8. Procédé selon la revendication 1, **caractérisé en ce que** les éléments presseurs sont formés par des éléments profilés, disposés de part et d'autre de là portion cintrée (6) de la bande de matériau (5) et appuyant contre la surface du tube intérieur (2), sous lesquels on fait passer en tirant la bande de matériau (5).

9. Procédé selon la revendication 1, **caractérisé en ce que** les éléments presseurs sont formés par des galets indépendants, disposés de part et d'autre de la portion cintrée (6) de la bande de matériau (5) et appuyant contre la surface du tube intérieur (2), sous lesquels on fait passer en tirant la bande de matériau (5).

10. Procédé selon la revendication 1, **caractérisé en ce que** les éléments presseurs sont formés par les portions latérales (20, 21) d'un cylindre profilé (18) présentant un évidement concave (19) de la surface de sa circonférence, les portions latérales (20, 21) du cylindre profilé (18) roulant sur la bande de matériau (5) en contact avec la surface du tube intérieur (2).

11. Procédé selon la revendication 10, **caractérisé en ce que**, pour la mise en forme de la bande de matériau (5), un élément de formage plaque la bande de matériau (5) prélevée de la bobine d'alimentation (15) contre la surface du cylindre profilé (18), lequel présente entre ses portions latérales (20, 21) un évidement (19) qui est complémentaire de la portion cintrée (6) de la bande de matériau (5).

12. Procédé selon la revendication 11, **caractérisé en ce que** l'élément de formage est un deuxième cylindre profilé dont la section transversale de la circonférence est complémentaire de celle du premier cylindre profilé.

13. Procédé selon l'une des revendications précédentes, **caractérisé en ce que**, sur le tube intérieur (2), un noyau oblong (11, 25) est amené contre la surface extérieure du tube intérieur (2), noyau contre lequel la bande de matériau (5) est plaquée afin de former sa portion cintrée (6).

14. Procédé selon la revendication 13, **caractérisé en ce que** le noyau (11, 25) n'est retiré de la portion cintrée (6) de la bande de matériau (5) qu'après le remplissage et le durcissement de la masse isolante (4).

15. Procédé selon la revendication 14, **caractérisé en ce que** l'on applique un agent de glissement sur le noyau oblong (11, 25).

16. Procédé selon l'une des revendications 13 à 15, **caractérisé en ce que**
a) on applique sur un tronçon de tube d'une longueur donnée au moins une bande de matériau (5) en introduisant un noyau (11) dont la longueur correspond à peu près à la longueur de la bande de matériau (5),
b) on introduit le tronçon de tube dans un tube enveloppe (3),
c) on remplit l'espace entre le tube intérieur (2) et le tube enveloppe (3) avec une masse isolante (4), et
d) après durcissement de la masse isolante (4), on retire l'ensemble du noyau (11) du canal (1) formé par la portion cintrée (6) de la bande de matériau (5).

17. Procédé selon l'une des revendications 13 à 15, **caractérisé en ce que** l'on applique en continu une bande de matériau (5) cintrée et on l'entoure d'un tube enveloppe (3), une masse isolante durcissable (4) étant introduite dans la zone enveloppée et la bande de matériau (5) étant appliquée sur un noyau oblong (25) qui se déplace en continu le long de l'axe longitudinal du tube intérieur (2).

18. Procédé selon la revendication 17, **caractérisé en ce que** la zone d'extrémité du noyau (25) se trouve dans la zone dans laquelle le durcissement de la masse isolante (4) introduite dans la zone enveloppée est pratiquement achevé.

19. Procédé selon l'une des revendications précédentes, **caractérisé en ce qu'**un dispositif applicateur se déplace en même temps que les éléments presseurs (20, 21) qui plaquent la bande de matériau (5), ainsi que le dispositif de liaison le long d'un tronçon de tube intérieur (2) stationnaire.

20. Procédé selon l'une des revendications 1 à 18, **caractérisé en ce qu'**un dispositif applicateur est immobile avec les éléments presseurs qui plaquent la bande de matériau (5), ainsi que le dispositif de liaison et **en ce qu'**un tronçon de tube intérieur (2) se déplace le long de ces dispositifs.

21. Procédé selon la revendication 20, **caractérisé en ce que** le dispositif applicateur et le dispositif de liaison sont maintenus de façon à pouvoir tourner et tournent ensemble avec le tronçon de tube intérieur (2) qui les traverse, autour de l'axe longitudinal de celui-ci.

22. Procédé selon l'une des revendications précédentes, **caractérisé en ce que** l'on dépose sur la face extérieure de la bande de matériau (5) déformable, au moins dans la zone de sa partie cintrée (6), une bande de matériau déformable élastiquement, de préférence une matière plastique alvéolaire (28).
